Europäisches Patentamt

European Patent Office

Office européen des brevets

(11) Veröffentlichungsnummer: **0 088 877**
A1

## (12) EUROPÄISCHE PATENTANMELDUNG

(21) Anmeldenummer: 83100997.2

(22) Anmeldetag: 03.02.83

(51) Int. Cl.³: **G 21 C 5/12**

(30) Priorität: 17.03.82 DE 3209605

(43) Veröffentlichungstag der Anmeldung:
21.09.83 Patentblatt 83/38

(84) Benannte Vertragsstaaten:
BE CH DE FR GB LI SE

(71) Anmelder: Deutsche Gesellschaft für
Wiederaufarbeitung von Kernbrennstoffen mbH
Hamburger Allee 4 Postfach 1407
D-3000 Hannover 1(DE)

(72) Erfinder: Einfeld, Klaus, Dr.
Stiegeweg 11
D-3162 Hohenhameln(DE)

(74) Vertreter: König, Norbert, Dipl.-Phys. Dr. et al,
Patentanwälte Leine & König Burckhardtstrasse 1
D-3000 Hannover 1(DE)

(54) Neutronen-Moderator für Behälter zur Lagerung von abgebrannten Kernbrennstoffen.

(57) Die Erfindung betrifft einen Neutronen-Moderator für Behälter zur Lagerung von abgebrannten Kernbrennstoffen. Erfindungsgemäß ist das Moderator-Material mit einem Material als Diffusionsbarriere für Wasserstoff beschichtet oder umhüllt. In an sich bekannter Weise ist dabei das Moderator-Material ein Metall-Hydrid, das in Form von Granulaten, kleinen Kugeln, Stäben oder Platten eingesetzt wird, die mit der Diffusionsbarriere beschichtet oder umhüllt sind. Als Metall-Hydrid wird insbesondere ein stabiles Hydrid der Titangruppe oder der Alkali- und Erdalkalimetalle verwendet. Sehr gut geeignet als Diffusionsbarrieren sind Oxyde oder Emaillen.

*Tig.1*

EP 0 088 877 A1

LEINE & KÖNIG

PATENTANWALT

0088877

Dipl.-Ing. Sigurd Leine · Dipl.-Phys. Dr. Norbert König

Burckhardtstraße 1          Telefon (05 11) 62 30 05
D-3000 Hannover 1

Deutsche Gesellschaft
für Wiederaufarbeitung
von Kernbrennstoffen mbH

Unser Zeichen          Datum
55o/27 EP          2. Februar 1983

Neutronen-Moderator für Behälter zur Lagerung von

abgebrannten Kernbrennstoffen.

Die Erfindung betrifft einen Neutronen-Moderator gemäß Oberbegriff des Anspruchs 1.

Behälter zur Lagerung von abgebrannten Kernbrennstoffen müssen besonders strenge Sicherheitsvorschriften erfüllen. Außer einer ausreichenden mechanischen Festigkeit muß eine ausreichende Abschirmung von Gamma- und Neutronenstrahlen gewährleistet sein, um sicherzustellen, daß die Oberflächendosisleistung unterhalb der zulässigen Werte liegt.

Als Moderator-Material für Neutronen ist die Verwendung von stark wasserstoffhaltigen Materialien bekannt, wobei mit gutem Erfolg vielfach Kunststoffe, beispielsweise Polyäthylen, eingesetzt werden, vergl.DE-AS 27 4o 933, DE-OS 28 31 646 und DE-GM 79 11 o3o. Diese Kunststoffe werden meist in kreisförmigen, in der Behälterwandung ausgebildeten Bohrungen angeordnet.

Durch die DE-OS 2o 19 446 ist es bekannt, Metallhydride in gekörnter Form als Moderatoren einzusetzen.

Metallhydride enthalten einen hohen Wasserstoffanteil, so daß sie als Moderatoren zur Abschirmung von Neutronen gut geeignet sind. Die Metallhydride weisen eine sehr hohe Wärmestabilität auf,

Die Aufgabe der vorliegenden Erfindung besteht darin, einen gegenüber den bekannten Moderatoren verbesserten Neutronen-Moderator zur Abschirmung von Neutronen zu schaffen.

Diese Aufgabe wird durch die im Kennzeichen des Anspruchs 1 angegebene Ausbildung gelöst.

Durch die erfindungsgemäße Ausbildung wird ein äußerst wirksamer und stabiler Neutronen-Moderator geschaffen.

Wird das Moderator-Material, für das bekannterweise ein Metallhydrid verwendet werden kann, in Form von Granulaten, kleinen Kugeln, Stäben oder Platten eingesetzt, so werden diese Granulate, Kugeln, Stäbe oder Platten mit der erfindungsgemäßen Diffusionsbarriere versehen.

Zweckmäßige und vorteilhaft einsetzbare Materialien für die Diffusionsbarriere sind im Anspruch 3 angegeben.

Die bisher eingesetzten Behälter zur Lagerung von abgebrannten Kernstoffen weisen üblicherweise in der Behälterwandung Bohrungen für den Neutronen-Moderator auf. In diese Bohrungen wird der erfindungsgemäß ausgebildete Neutronen-Moderator eingebracht.

Anhand in der beigefügten Zeichnung dargestellter Ausführungsbeispiele soll die Erfindung näher erläutert werden.

0088877

Es zeigen

Fig. 1  eine erfindungsgemäß ausgebildete kleine Neutronen-Moderatorkugel im Schnitt und

Fig. 2  einen erfindungsgemäß ausgebildeten Neutronen-Moderatorstab.

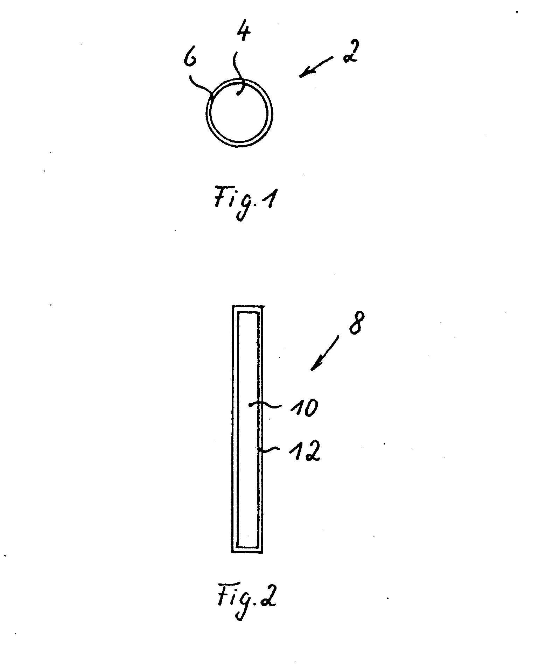

Die Fig. 1 zeigt eine Neutronen-Moderatorkugel 2 mit einem Kern 4 und einer Kugelschale oder eine Beschichtung 6.

Die Fig. 2 zeigt einen Neutronen-Moderatorstab 8 mit einem Kern 1o und einer Hülle oder eine Beschichtung 12.

Der Kern 4 bzw. 1o besteht vorzugsweise aus einem Metallhydrid, beispielsweise Zirkonhydrid, und die Kugelschale oder die Beschichtung 6 bzw. die Hülle oder Beschichtung 12 aus einer Diffusionsbarriere für Wasserstoff, beispielswiese aus einem Oxyd oder einer Emaille.

LEINE & KONIG

PATENTANWÄLTE

0088877

Dipl.-Ing Sigurd Leine · Dipl.-Phys Dr Norbert König

Burckhardtstraße 1
D 3000 Hannover 1

Telefon (0511) 62 30 05

Deutsche Gesellschaft
für Wiederaufarbeitung
von Kernbrennstoffen mbH

Unser Zeichen

550/27 EP

Datum

2. Februar 1983

Patentansprüche

1. Neutronen-Moderator zur Abschirmung von Neutronen bei Behältern zur Lagerung von abgebrannten Kernstoffen, dadurch gekennzeichnet, daß das Moderator-Material mit einem Material als Diffusionsbarriere (6, 12) für Wasserstoff beschichtet oder umhüllt ist.

2. Moderator nach Anspruch 1, dadurch gekennzeichnet, daß das Moderator-Material in an sich bekannter Weise ein Metall-Hydrid (insbes. ein stabiles Hydrid der Titangruppe, der Alkali- und Erdalkalimetalle) ist, das in Form von Granulaten, kleinen Kugeln (2), Stäben (8) oder Platten eingesetzt wird, die mit der Wasserstoffdiffusionsbarriere (6, 12) beschichtet oder umhüllt sind.

3. Moderator nach Anspruch 1 oder 2, dadurch gekennzeichnet, daß als Diffusionsbarriere Oxyde und/oder Emaillen eingesetzt werden.

Dr.K./H.

550/27
0088877

Fig.1

Fig.2

Europäisches Patentamt

**EUROPÄISCHER RECHERCHENBERICHT**

**0088877**
Nummer der Anmeldung

EP 83 10 0997

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-1 299 480 (INTERATOM)<br>* Insgesamt * | 1-3 | G 21 C 5/12 |
| X | US-A-3 277 565 (BOHLANDER)<br>* Spalte 3, Absatz 2 * | 1,2 | |
| A,D | FR-A-2 431 754 (TRANSNUKLEAR)<br>* Seite 3, Absatz 1; Figuren * | 1 | |
| | ----- | | **RECHERCHIERTE SACHGEBIETE (Int. Cl. ³)**<br><br>G 21 C 5/00 |

Der vorliegende Recherchenbericht wurde für alle Patentansprüche erstellt.

| Recherchenort<br>DEN HAAG | Abschlußdatum der Recherche<br>14-06-1983 | Prüfer<br>KAVCIC D. |
|---|---|---|